(19) Europäisches Patentamt European Patent Office Office européen des brevets

(11) EP 2 348 058 B1

(12) **EUROPEAN PATENT SPECIFICATION**

(45) Date of publication and mention
of the grant of the patent:
**01.01.2014 Bulletin 2014/01**

(51) Int Cl.:
*C08F 297/08* (2006.01)    *C08L 23/10* (2006.01)
*C08L 23/16* (2006.01)    *C08F 210/06* (2006.01)
*C08F 2/00* (2006.01)

(21) Application number: **10000645.1**

(22) Date of filing: **22.01.2010**

(54) **Heterophasic polypropylene resin and composition**

Heterophasischer Polypropylen-Harz und Zusammensetzung

Résine et composition de polypropylène hétérophasique

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**27.07.2011 Bulletin 2011/30**

(73) Proprietor: **Borealis AG**
**1220 Vienna (AT)**

(72) Inventors:
• **Grein, Christelle**
**4020 Linz (AT)**
• **Braun, Juliane**
**4040 Linz (AT)**
• **Bernreitner, Klaus**
**4010 Linz (AT)**

• **Grestenberger, Georg**
**3352 St. Peter in der Au (AT)**
• **Hafner, Norbert**
**4020 Linz (AT)**
• **Rauch, Martin**
**4192 Schenkenfelden (AT)**
• **Potter, Elisabeth**
**4020 Linz (AT)**

(74) Representative: **Kador & Partner**
**Corneliusstrasse 15**
**80469 München (DE)**

(56) References cited:
EP-A1- 1 724 303    EP-A1- 1 801 155
EP-A1- 2 216 350    EP-A1- 2 223 943
EP-A2- 0 480 536    EP-A2- 1 333 040
WO-A1-96/11216    WO-A1-2005/014713
US-A1- 2007 203 298

## Description

The present application relates to a heterophasic polypropylene resin having high E-modulus and good impact strength and, to a heterophasic polypropylene composition containing fillers. The present invention is also concerned with improved impact modifiers.

Various attempts have been made to improve the properties of polypropylenes such as by incorporation of fillers, by specific nucleation and by incorporation of ethylene propylene rubber. However, ethylene propylene rubber is relatively expensive and causes problems in recycling. Even further, the incorporation of additional impact modifiers does not lead to further improvements. Similarly, the incorporation of high amount of fillers reduces toughness, increased embrittlement, leads to higher scratch sensitivity and a larger amount of surface defects, a reduction of the processability and - depending on the filler - smell and taste problems.

Considering the above-mentioned disadvantages, the object of the present invention is to provide a polypropylene resin and composition having high impact strength and high stiffness. Furthermore, the polymer should have good surface quality and good scratch resistance.

Therefore, the present invention provides a

composition comprising

a heterophasic polypropylene resin,

a reinforcement component (C), and

an inorganic filler (D), the inorganic filler being talc,

whereby the heterophasic polypropylene resin comprises at least a first phase comprising a propylene homo- or copolymer (A), wherein the propylene homo- or copolymer (A) has a polydispersity index of at least 7.0 Pa$^{-1}$ determined according to ISO 6721-1, and

a second phase being present in the form of particles being dispersed in the first phase comprising a polyethylene homo- or copolymer (B), wherein the amount of comonomer units of comonomer (B) is less than 10 wt.-%.

It has been surprisingly found that the inventive polypropylene resins and compositions yield high impact strength, high stiffness and excellent scratch resistance. Furthermore, the inventive compositions yield articles having a good surface quality and excellent scratch resistance.

## General concept

The present invention is based on the surprising finding that superior heterophasic polypropylene resins are available when a polypropylene having a polydispersity of at least 7.0 Pa$^{-1}$ is combined with a polyethylene polymer as a dispersed phase, a reinforcement component and an inorganic filler, the inorganic filler being talc.

The heterophasic polypropylene resin and the heterophasic polypropylene composition according to the invention can be formed into articles of various shapes through known techniques, such as injection molding, extrusion, blow molding, compression molding, thermoforming, fiber spinning, foaming, film casting and/or blowing etc.

Thus, the present invention provides a composition comprising a heterophasic polypropylene resin, a reinforcement component (C), and an inorganic filler (D), the inorganic filler being talc, whereby the heterophasic polypropylene resin comprises at least a first phase comprising a propylene homo- or copolymer (A), wherein the propylene homo- or copolymer (A) has a polydispersity index of at least 7.0 Pa$^{-1}$ determined according to ISO 6721-1, and a second phase being present in the form of particles being dispersed in the first phase comprising a polyethylene homo- or copolymer (B), wherein the amount of comonomer units of comonomer (B) is less than 10 wt.-%.

The heterophasic polypropylene resin of the present invention allows the production of articles having excellent scratch resistance.

## Definitions

The term "propylene copolymer" denotes a propylene copolymer with a molar amount of propylene units of more than 50%.

The term "polyethylene copolymer" denotes an ethylene copolymer with a molar amount of ethylene units of more than 50%.

All expressions containing letters from the Greek alphabet are repeated in squared brackets in case errors occur when reprinted. The values of storage modulus (G'), loss modulus (G"), complex modulus (G*) and complex viscosity ($\eta$*) [(eta*)] are obtained as a function of frequency ($\omega$) [(omega)] as described in the experimental part. The polydispersity index,

$$PI = 10^5/G_c,$$

is calculated from cross-over point of G'($\omega$) [G'(omega)] and G"($\omega$) [G"(omega)] at 230°C, for which

$$G'(\omega_c) = G''(\omega_c) = G_c \qquad [G'(omega_c) = G''(omega_c) = G_c]$$

holds.

For this invention a periodically varying function shall consist of one or more period(s) of the same length. In a periodically varying function the condition

$$f(x+a) = f(x)$$

is met for all values of x whereby a is the length of one variation period.

As this invention is concerned with various time dependent kinetics the following definitions shall apply.

In the present application "monotonically increasing function" denotes a function wherein $f(x_2) \geq f(x_1)$ when $x_2 > x_1$.

In the present application "strictly monotonic increasing function" denotes a function wherein $f(x_2) > f(x_1)$ when $x_2 > x_1$.

In the present application "monotonically decreasing function" denotes a function wherein $f(x_2) \leq f(x_1)$ when $x_2 > x_1$.

In the present application "strictly monotonic decreasing function" denotes a function wherein $f(x_2) < f(x_1)$ when $x_2 > x_1$.

The variation of the hydrogen concentration of the reactor may be carried out in the from of a sinusoidal function, a non-sinusoidal rectangular, a saw-tooth function, a triangle function, one or more pulse functions, one or more step functions or any combination thereof.

The term "hydrogen concentration in at least one reactor is periodically varied" denotes that the hydrogen concentration in the reactor is a function of time which is not constant.

The hydrogen concentration in the reactor is normally determined via online gas chromatography.

Unless otherwise mentioned in the following the term "polymerization" is tantamount to "preparing an olefin homo- or copolymer in the presence of an olefin polymerization catalyst"

For the purpose of the present invention the term "ppm" for the hydrogen concentration denotes parts per weight of hydrogen per one million parts per weight of the combined amount of hydrogen, monomers and diluent, if present, in the reactor.

For this invention the broadness of the molecular weight distribution is determined by melt rheological measurement according ISO 6721-1. The values obtained by said measurement are given in $Pa^{-1}$. This value is also referred to as polydispersity index (PI) in the literature, e.g. in WO 2008/006586. The reason for the use of the melt rheological measurement is that $M_w/M_n$ determination by gel permeation chromatography (GPC) according to ISO16014-1:2003 as a solvent technique is not applicable to ultra high molecular weight material. Unfortunately, the terms "the molecular weight distribution", "(MWD)", "polydispersity" and "polydispersity index" are prevalently used synonymously in the literature to denote the ratio $M_w/M_n$ which is scientifically not correct.

## Heterophasic polypropylene resin

The heterophasic polypropylene resin comprises at least two phases. Commonly, the literature differentiates into matrix phase and dispersed phase. It is preferred that the heterophasic polypropylene resin has two phases. The number of phases easily can be detected by DSC.

The first phase comprises a propylene homo- or copolymer (A). The second phase comprises the polyethylene homo- or copolymer (B).

In a preferred embodiment, the weight ratio of propylene homo- or copolymer (A) to polyethylene homo- or copolymer (B) is in the range of 98 / 2 to 80 / 20, more preferably in the range of 97 / 3 to 85 / 15.

In a further preferred embodiment, the heterophasic polypropylene resin consists of the propylene homo- or copolymer (A), the polyethylene homo-or copolymer (B) and optionally additives in an amount of 5 wt.-% with respect to the total of the heterophasic polypropylene resin. More preferably, the heterophasic polypropylene resin consists of the propylene homo- or copolymer (A), the polyethylene homo- or copolymer (B) and optionally additives in an amount of 5 wt.-% with respect to the total of the heterophasic polypropylene resin, whereby the weight ratio of the propylene homo- or copolymer (A) to the polyethylene homo- or copolymer (B) is in the range of 98 / 2 to 80 / 20, more preferably in the range of 97 / 3 to 85 / 15.

Moreover, the additives preferably are selected from miscible thermoplastics, antioxidants, UV-stabilizers, lubricants, demoulding agents, nucleating agents, fillers, colouring agents, and foaming agents. The additives can be added to the composition before, during or after the blending in an amount of up to 5.0 wt.-%, preferably up to 3.0 wt.-% based on the total polypropylene resin.

The heterophasic polypropylene resin is preferably characterized by the size of the particles forming the second phase. Preferably, the particles forming the second phase have a weight average diameter of 2 micrometer or less when determined by electron microscopy (scanning - SEM - or transmission - TEM) on contrasted specimens cut from compression molded plaques without obvious orientation.

## Component (A)

The propylene homo- or copolymer (A) has a polydispersity index (PI), determined according ISO 6721-1, of at least $7.0 \ Pa^{-1}$, preferably of at least $7.5 \ Pa^{-1}$, more preferably of at least $8.0 \ Pa^{-1}$, even more preferably of at least $8.2 \ Pa^{-1}$, and most preferably of at least $8.5 \ Pa^{-1}$. The PI will usually not be higher than $15.0 \ Pa^{-1}$.

Preferably, component (A) has a weight average molecular weight ($M_w$) of at least 400,000 g/mol, more preferably of at least 450,000 g/mol, even more preferably of at least 500,000 g/mol and most preferably of at least 550,000 g/mol. For processability reasons said $M_w$ does usually not exceed 1,500,000 g/mol.

Preferably, the terminal relaxation time $\lambda_T$ [lambda$_T$] of the propylene homo- or copolymer (A) calculated at a relaxation strength $H(\lambda)$ [H(lambda)] of 0.1 Pa is at least 1000 s, more preferably at least 2500 s, even more preferably at least 4000 s. Usually said terminal relaxation time $\lambda_T$ [lambda$_T$] is calculated at a relaxation strength $H(\lambda)$ [H(lambda)] of 0.1 Pa will not be higher than 50,000 s.

The homo- or copolymer (A) preferably has an amount of insoluble material in boiling p-xylene at 1013 hPa between 2.0 and 8.0 wt.-%. More preferably, the amount of insoluble material in boiling p-xylene at 1013 hPa is between 2.0 and 4.0 wt.-%.

Preferably, the propylene homo- or copolymer (A) has a pentad concentration expressed in mmmm of more than 95%, more preferably of more than 96% and most preferably of more than 97% measured by $^{13}$C-NMR.

The propylene homo- or copolymer (A) preferably has a melting temperature in the range of 160 to 175 °C, more preferably 162 to 175 °C.

Preferably, component (A) is a propylene homopolymer or a propylene block copolymer comprising a propylene homopolymer and a propylene/alpha-olefin rubber. In case component (A) comprises a propylene/alpha-olefin rubber, the comonomers used for the production of the propylene/alpha-olefin rubber may be selected from any copolymerisable alpha-olefins. However, ethylene and/or $C_4$- to $C_{20}$-alpha-olefins are preferred, even more preferred are ethylene and/or $C_4$- to $C_{15}$-alpha-olefins, even more preferred are ethylene and/or $C_4$- to $C_{10}$-alpha-olefins, particularly ethylene, 1-butene, 1-hexene, 1-octene. Most preferably the alpha-olefin is ethylene.

More preferably component (A) is a propylene homopolymer.

## Component (B)

The ethylene homo- or copolymer (B) preferably is an ethylene copolymer composed of ethylene and alpha olefins. It is particularly preferred that the ethylene homo- or copolymer (B) contains only minor amounts of propylene units, i.e. propylene units in an amount of less than 10 wt.-%.

More preferably the ethylene copolymer (B) contains propylene units in an amount of less than 8 wt.-%wt.-%, most preferably less than 5 wt.-% with respect to the total of the polyethylene copolymer (B).

The amount of comonomers in general of copolymer (B) preferably should be relatively small, i.e. the amount of comonomer units preferably should be less than 10 wt% . More preferably the total comonomer content of copolymer (B) is less than 8 wt.-% and most preferably less than 5 wt.-%. Corresponding to said comonomer content, the ethylene homo- or copolymer (B) preferably has a melting temperature in the range of 120 to 135°C.

**Heterophasic polypropylene composition**

The present invention is further concerned with a heterophasic polypropylene composition comprising the heterophasic polypropylene resin as described above and a modifier.

A modifier is any material leading to a change of the properties when comparing the heterophasic polypropylene composition with the heterophasic polypropylene resin.

The modifier preferably is present in an amount of 5 to 40 wt.-% with respect to the total of the heterophasic polypropylene composition.

More preferably, the modifier is at least one component selected from the group of (C) reinforcing components; (D) fillers; and (E) elastomers and/or plastomers. Typically, the heterophasic polypropylene composition includes more than one modifier. In a first preferred embodiment the heterophasic polypropylene composition includes components (D) and (E). In a second preferred embodiment, the heterophasic polypropylene composition includes components (C), (D) and (E).

**Reinforcing component (C)**

Reinforcing components are components which lead to an optimization of the mechanical properties. Examples include glass fibers, carbon fibers and further organic polymers. Component (C) preferably is an organic polymer. Even more preferably, component (C) is a polyolefin, most preferably component (C) is polypropylene homo- or copolymer.

If present, the amount of reinforcing component (C) in the heterophasic polypropylene composition according to the present invention is preferably in the range of from 2 to 10 wt.-%, more preferably in the range of 5 to 7.5 wt.-% with respect to the total of the heterophasic polypropylene composition.

In a first particularly preferred embodiment, component (C) is a homo- or copolymer (C1) having a weight average molecular weight of at least 900 kg/mol.

In a second particularly preferred embodiment component is a high melt strength polypropylene homo- or copolymer (C2) particularly a polypropylene homo-or copolymer (C2) having a branching index g' of 0.9 or lower, more preferably 0.8 or lower and most preferably 0.7 or lower. The branching index g' correlates with the amount of branches of a polymer. The branching index g' is defined as g'=[IV]br/[IV]lin in which g' is the branching index, [IV]br is the intrinsic viscosity of the branched polypropylene and [IV]lin is the intrinsic viscosity of the linear polypropylene having the same weight average molecular weight (within a range of $\pm 10$ %) as the branched polypropylene. Thereby, a low g'-value is an indicator for a high branched polymer. The intrinsic viscosity needed for determining the branching index g' is measured according to DI N ISO 1628/1 , October 1999 in Decalin at 135°C. Reference is made in this context to B.H. Zimm and W.H. Stockmeyer, J. Chem. Phys. 17,1301 (1949) being incorporated by reference herewith.

The high degree of branching of the high melt strength polypropylene (HMS-PP) contributes also to its melt strength. Accordingly it is preferred that the high melt strength polypropylene (HMS-PP) is further characterized by a strain hardening behavior. Thus it is appreciated that the high melt strength polypropylene (HMS-PP) has strain hardening factor (SHF) of 3.5 to 30.0, more preferably of 5.0 to 20.0, measured at a strain rate of 3.0 s-1 and a Hencky strain of 3.0.

**Filler (D)**

The heterophasic polypropylene composition according to the present invention preferably includes at least one inorganic filler as component (D). More preferably the fillers (D) have anisotropic particle structure. Particularly preferred particle structures are these which are anisotropic in a one-dimension or two dimensions. Especially preferred types are fiber-like and platelet like structures. Preferred fillers include natural silicates, glass platelets and/or fibers, more preferably inosilicates (e.g. wollastonite), phyllosilicates (e.g. clay minerals and mica) and/or glass platelets, even more preferably phyllosilicates or wollastonite, even more preferably clay minerals (e.g. talc, montmorillonite, hectorite, vermiculite, bentonite), mica or wollastonite. Among these, talc, mica and wollastonite are especially preferred whereof talc is especially preferred.

Preferably, the amount of filler (D) is at least 3, more preferably is at least 5, even more preferably at least 11 and most preferably is at least 15 weight percent with respect to the total of the heterophasic polypropylene composition.

Further, preferably, the amount of inorganic filler (D) is not more than 25, more preferably not more than 22 and most preferably not more than 20 weight percent with respect to the total of the heterophasic polypropylene composition.

Preferably, the filler before compounding has a particle size d95 of 50 micrometer or less, preferably 25 micrometer or less and most preferably 15 micrometer or less measured by laser diffraction according to ISO 13320-1:1999.

Preferably, the particle size d95 before compounding of the filler preferably is not less than 1 micrometer, more preferably not less than 2 micrometers measured by laser diffraction according to ISO 13320-1:1999.

Preferably, the filler has a specific surface (BET) before compounding of at least 5.0 m2/g, more preferably of at least 7.0 m$^2$/g and most preferably at least 9.0 m$^2$/g, determined according to DIN 66131/2. The surface area will usually not be higher than 100.0 m$^2$/g.

Preferably, the filler has an average aspect ratio before compounding, defined as the ratio between the biggest and the smallest average dimensions of the reinforcing agents before compounding the heterophasic polypropylene composition, of at least 5.0, even more preferably of at least 7.5 and most preferably of at least 10.0. Usually the average aspect ratio will not be higher than 50.0.

Thus, a particularly preferred heterophasic polypropylene composition according to the present invention is obtainable by compounding of an inorganic filler with an average aspect ratio before compounding of above 5.0.

**Elastomer or plastomer (E)**

The heterophasic polypropylene composition according to the present invention preferably further includes an elastomer or plastomer (E) selected from the group of ethylene propylene rubbers, ethylene propylene diene rubber, and linear low density polyethylene which is made by a single site catalyst and has a density of below 900 kg/m$^3$.

Typical examples for ethylene propylene rubbers are Vanadium-catalyzed solution products such as Vistalon 606 of ExxonMobil (USA). Typical examples for ethylene propylene diene rubbers are gas-phase or solution products such as Royalene 501 of Lion Copolymer LLC (USA). Alternatively linear low density polyethylene plastomers being made by a single site catalyst and having a density of below 900 kg/m$^3$ can be used. A typical example is Engage 8400 of DOW Chemicals (USA). The production of such materials is for example described in US 2,933,480, US 3,093,620, US 3,884,993, US 5,712,353, US 5,278,272 and US 5,324,800 which are incorporated by reference.

The elastomer or plastomer (E) preferably is present in the heterophasic polypropylene composition in amount of 0.1 to 15 wt.-%, more preferably 0.5 to 10 wt.-%.

**Specific preferred embodiments**

In a first particularly preferred embodiment the inventive heterophasic polypropylene composition includes 70 to 95 wt.-% of the heterophasic polypropylene resin consisting of the propylene homo- or copolymer (A), the polyethylene homo- or copolymer (B) and stabilizers in an amount of 5 wt.-% with respect to the total of the heterophasic polypropylene resin. In this embodiment, the weight ratio of the propylene homo- or copolymer (A) to the polyethylene homo- or copolymer (B) is in the range of in the range of 97 / 3 to 85 / 15. Moreover, in this embodiment, the total amount of modifiers is from 5 to 30 wt.-% with respect to the total of the heterophasic polypropylene composition. The heterophasic polypropylene composition according to this embodiment preferably does not include a reinforcing component. Preferably, filler (D) is present in an amount of 4 to 20 wt.-% and the optional component (E) is present in an amount of 0 to 10 wt.-%.

In a second particularly preferred embodiment the inventive heterophasic polypropylene composition includes 60 to 95 wt.-% of the heterophasic polypropylene resin consisting of the propylene homo- or copolymer (A), the polyethylene homo- or copolymer (B) and stabilizers in an amount of 5 wt.-% with respect to the total of the heterophasic polypropylene resin. In this embodiment, the weight ratio of the propylene homo- or copolymer (A) to the polyethylene homo- or copolymer (B) is in the range of in the range of 97 / 3 to 85 / 15. Moreover, in this embodiment, the total amount of modifiers is from 5 to 40 wt.-% with respect to the total of the heterophasic polypropylene composition. The heterophasic polypropylene composition according to this embodiment preferably include a reinforcing component (C) in an amount of 2 to 10 wt.-%, preferably 5 to 7.5 wt.-% . More preferably, filler (D) is present in an amount of 5 to 20 wt.-% and optional component (E) is present in an amount of up to 10 wt.-%.

**Properties of the heterophasic polypropylene composition**

The heterophasic polypropylene composition according to the present invention preferably has an MFR$_2$, determined according to ISO 1133 at  230 °C and under a load of 2.16 kg, from 2.0 to 60 g/10 min, more preferably 5.0 to 40 g/10 min, most preferably 7.0 to 38 g/10 min.

The heterophasic polypropylene composition according to the present invention is further characterized by a tensile modulus determined according to ISO 527-2 of at least 2800 MPa measured on a test specimen prepared by injection molding according to ISO 1873-2.

Further, preferably, the heterophasic polypropylene composition has a tensile modulus determined according to ISO 527-2 of at least 2000 MPa, more preferably of at least 2200 MPa and most preferably of at least 2300 MPa measured on a test specimen prepared by injection molding according to ISO 1873-2.

The tensile modulus will usually not be higher than 7000 MPa.

The heterophasic polypropylene composition preferably has a flexural modulus, determined according to ISO 178 in three-point bending on a test specimen prepared by injection molding according to ISO 1873-2, of at least 2300 MPa, more preferably of at least 2400 MPa. Usually the flexural modulus will not be higher than 4000 MPa.

Preferably, the heterophasic polypropylene composition has an impact strength in a charpy notch test according to ISO 179/1eA:2000 at + 23 °C of at least 3.0 kJ/m$^2$, more preferably of at least 3.3 kJ/m$^2$ measured on a V-notched test specimen prepared by injection molding according to ISO 1873-2. Said impact strength will usually not be higher than 20.0 kJ/m$^2$.

Further, preferably, the heterophasic polypropylene composition has a heat deflection temperature determined according to ISO 75A at 1.8 MPa of at least 55 °C, more preferably of at least 58 °C, most preferably at least 60 °C measured on a test specimen having the dimension of 80x10x4 mm$^3$ and prepared by injection molding according to ISO 1873-2. Usually said heat deflection temperature will not be higher than 90 °C.

Preferably, the heterophasic polypropylene composition has a longitudinal shrinkage of not more than 2.2 %, more preferably of not more than 1.8% and most preferably of not more than 1.5%. Furthermore, the heterophasic polypropylene composition has a transversal shrinkage of not more than 1.6%, more preferably of not more than 1.4% and most preferably of not more than 1.2%. The specimen used for the determination of the longitudinal and transversal shrinkage of the heterophasic polypropylene composition has a dimension of 150 x 80 x 2 mm$^3$ and has been prepared by injection molding as described in the experimental part. Longitudinal and transversal shrinkage are both measured on the 150 x 80 mm$^2$ side of the specimen. Longitudinal shrinkage denotes the shrinkage in the direction of the polymer flow during injection molding. Transversal shrinkage denotes the shrinkage in the direction perpendicular to the flow direction.

The heterophasic polypropylene composition according to the present invention further allows the production of articles with outstanding scratch resistance. The heterophasic polypropylene composition is preferably characterized by ∆L values of 1.5 or lower, more preferably 1.0 or lower and most preferably below 0.8 or lower when being measured on injection molded test specimens at a force of 10 N using cylindrical metal pen with a ball shaped end (radius = 0.5 mm ± 0.01) and a cutting speed of 1000 mm/min as described in the experimental part. Further details about this test being commonly used in industry are published by Thomas Koch and Doris Machl, in POLYMER TESTING 26 (2007), p. 927-936 "Evaluation of scratch resistance in multiphase PP blends". This article is herewith incorporated by reference.

**Process**

A process for the production of a composition according to the present invention comprises

(i) polymerizing propylene and optionally one or more comonomers in the presence hydrogen, whereby the hydrogen concentration in the reactor is periodically varied and whereby the relation $\dfrac{P}{\tau} > 2.0$, P being the time of one variation period of the hydrogen concentration in the reactor; and $\tau$ being the average residence time of the polymer in the reactor is fulfilled;

(ii) degassing the obtained intermediate product

(iii) further polymerizing the reaction product of step (ii), having a polydispersity index of at least 7.0 Pa-1 determined according to ISO 6721-1, in the presence of ethylene under conditions such that the produced polyethylene homo- or copolymer with a weight average molecular weight $M_w$ of above 500 000 g/mol is obtained, wherein the amount of comonomer units of the polyethylene copolymer is less than 10 wt.-%.,

and further blending the heterophasic polypropylene resin in at least one extruder with the reinforcement component (C), the inorganic filler talc (D) and optionally an elastomer and/or plastomer (E).

**Catalyst**

The propylene homo- or copolymer (A) is produced in the presence of a Ziegler-Natta catalyst, more preferably in the presence of a Ziegler-Natta catalyst capable of catalyzing the polymerization of propylene at a pressure from 10 to 100 bar, preferably from 25 to 80 bar, and at a temperature from 40 to 120 °C, preferably from 60 to 100 °C.

The Ziegler-Natta catalyst used in the present invention preferably comprises a catalyst component, a cocatalyst component, an external donor, the catalyst component of the catalyst system primarily containing magnesium, titanium, halogen and an internal donor. Electron donors control the stereo-specific properties and/or improve the activity of the catalyst system. A number of electron donors including ethers, esters, polysilanes, polysiloxanes, and alkoxysilanes are known in the art.

The catalyst preferably contains a transition metal compound as a procatalyst component. The transition metal compound is selected from the group consisting of titanium compounds having an oxidation degree of 3 or 4, vanadium compounds, zirconium compounds, cobalt compounds, nickel compounds, tungsten compounds and rare earth metal compounds. The titanium compound usually is a halide or oxyhalide, an organic metal halide, or a purely metal organic compound in which only organic ligands have been attached to the transition metal. Particularly preferred are the titanium halides, especially titanium tetrachloride, titanium trichloride and titanium tetrachloride being particularly preferred.

Magnesium dichloride can be used as such or it can be combined with silica, e.g. by absorbing the silica with a solution or slurry containing magnesium dichloride. A lower alcohol can be used which preferably is methanol or ethanol and most preferably ethanol.

A preferred type of catalyst to be used in the present invention is disclosed in EP 591 224 being incorporated by reference. EP 591 224 discloses a method for preparing a pro-catalyst composition from magnesium dichloride, a titanium compound, a lower alcohol and an ester of phthalic acid containing at least five carbon atoms. According to EP 591 224 , a trans-esterification reaction is carried out at an elevated temperature between the lower alcohol and the phthalic acid ester, whereby the ester groups from the lower alcohol and the phthalic ester change places.

The alkoxy group of the phthalic acid ester used comprises at least five carbon atoms, preferably at least eight carbon atoms. Thus, as the ester may be used propylhexyl phthalate, dioctyl phthalate, di-isodecyl phthalate and ditridecyl phthalate. The molar ratio of phthalic acid ester and magnesium halide is preferably about 0.2:1.

The transesterification can be carried out, e.g. by selecting a phthalic acid ester - a lower alcohol pair, which spontaneously or by the aid of a catalyst, which does not damage the pro-catalyst composition, transesterifies the catalyst at an elevated temperature. It is preferred to carry out the transesterification at a temperature which is at least 110 °C, preferably is at least 120°C and which preferably does not exceed 140°C more preferably does not exceed 115 °C.

The catalyst is used together with an organometallic cocatalyst and with an external donor. Generally, the external donor has the formula

$$R_n R'_m Si(R''O)_{4-n-m}$$

wherein

R and R' can be the same or different and represent a linear, branched or cyclic aliphatic, or aromatic group;

R'' is methyl or ethyl;

n is an integer of 0 to 3;

m is an integer of 0 to 3; and

n+m is 1 to 3.

In particular, the external donor is selected from the group consisting of cyclohexyl methylmethoxy silane (CHMMS), dicyclopentyl dimethoxy silane (DCPDMS), diisopropyl dimethoxy silane, di-isobutyl dimethoxy silane, and di-t-butyl dimethoxy silane.

As a cocatalyst an organoaluminium compound is preferably used. The organoaluminium compound is preferably selected from the group consisting of trialkyl aluminium, dialkyl aluminium chloride and alkyl aluminium sesquichloride.

The components of the catalyst can be fed into the reactor separately or simultaneously or the components of the catalyst system can be precontacted prior to the reactor. Such pre-contacting can also include a catalyst pre-polymerization prior to feeding into the polymerization reactor. In the pre-polymerization, the catalyst components are contacted for a short period with a monomer before feeding to the reactor.

It is particularly preferred that the catalyst for producing the propylene homo- or copolymer (A) is also used for producing the ethylene homo- or copolymer (B). More preferably, the process for producing the propylene homo- or copolymer (A) and the ethylene homo- or copolymer (B) is characterized by the feed of the catalyst only to the first reaction stage producing the propylene homo- or copolymer (A). In this case, the polymerization of ethylene homo- or copolymer (B) is catalyzed by the amount of catalyst still being active in the reaction mixture.

## Reactor type

The propylene homo- or copolymer (A) can have a unimodal or multimodal, like bimodal, molar mass distribution (MWD). Thus, the equipment of the polymerization process can comprise any polymerization reactors of conventional design for producing propylene homo- or copolymers (A). For the purpose of the present invention "slurry reactor" designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. According to a preferred embodiment the slurry reactor comprises (is) a bulk loop reactor. By "gas phase reactor" is meant any mechanically mixed or fluid bed reactor. Preferably the gas phase reactor comprises a mechanically agitated fluid bed reactor with gas velocities of at least 0.2 m/sec. Thus, the polymerization reactor system can comprise one or more conventional stirred tank slurry reactors, as described in WO 94/26794, and/or one or more gas phase reactors.

Preferably the reactors used are selected from the group of loop and gas phase reactors and, in particular, the process employs at least one loop reactor and at least one gas phase reactor. This alternative is particularly suitable for producing the propylene homo- or copolymer (A) with a broad molecular weight distribution (MWD) according to this invention. By carrying out the polymerization in the different polymerization reactors in the presence of different amounts of hydrogen the MWD of the product can be broadened and its mechanical properties improved. It is also possible to use several reactors of each type, e.g. one loop reactor and two or three gas phase reactors or two loop reactors and one gas phase reactor, in series.

It is particularly preferred that component (A) and component (B) are produced by in-situ blending.

**Conditions for obtaining high PI**

A preferred process of producing the homo- or copolymer (A) is the following:

A process for the production of polyolefins in one or more reactors, wherein in at least one reactor the process comprises the following steps

(ia) feeding one or more (co)monomers and hydrogen to the reactor, whereby the hydrogen concentration in the reactor is periodically varied;
(ib) preparing an olefin homo- or copolymer in the presence of an olefin polymerization catalyst;
(e) obtaining the olefin homo- or copolymer the reactor

whereby
the following relation is fulfilled

$$\frac{P}{\tau} > 2.0$$

wherein

P    is the time of one variation period of the hydrogen concentration in the reactor; and
$\tau$    [tau] is the average residence time of the polymer in the reactor.

The average residence time $\tau$ [tau] in a reactor is defined as the ratio of the reaction volume of the reactor $V_R$ to the volumetric outflow rate from the reactor $Q_o$ i.e. $\tau = V_R/Q_o$ [tau = $V_R/Q_o$].

In case of a loop reactor or a liquid-filled continous stirred tank reactor (CSTR), $V_R$ equals to the reactor volume; in case of a normal CSTR, it equals to the volume of the slurry within the reactor.

A variation period is the period of time in which the value of the initial hydrogen concentration in the reactor is reached again under the proviso that there is an enduring change. For example, if the initial hydrogen concentration is 80 ppm and is increased up to 5000 ppm and again lowered, the variation period will denote the period of time until the hydrogen concentration in the reactor is 80 ppm again.

The process allows to obtain the desired high polydispersity index (PI) values of component (A) without the use of two or three reactors coupled in series. At the same time, the process yields outstanding homogeniety.

Preferably, the hydrogen concentration in the reactor is varied within a range defined by a lower limit and an upper limit whereby the lower limit of the hydrogen concentration in the reactor is varied within is preferably at least 10 ppm, more preferably at least 30 ppm and most preferably at least 60 ppm and wherein the upper limit of the range the hydrogen concentration in the reactor is varied within is preferably not more than 20,000 ppm, more preferably not more than 17,500 ppm, even more preferably not more than 15,000 ppm and most preferably not more than 12,500 ppm.

Preferably, the difference: [upper limit minus lower limit] is at least 3,500 ppm, more preferably at least 5,000 ppm and most preferably at least 6,500 and most preferably at least 8,000 ppm.

The difference: [upper limit minus lower limit] is preferably not more than 19,000 ppm, more preferably not more than 16,000 ppm and most preferably not more than 13,000 ppm.

This shall be explained by means of the following non-limiting example wherein

- the hydrogen concentration is varied between 80 ppm and 10,000 ppm;

- thus, the difference [upper limit minus lower limit] is 9,920 ppm.

The periodical variation of the hydrogen concentration in the reactor preferably starts with an increase of the hydrogen concentration in said reactor.

Preferably, one variation period comprises, more preferably consists of, two time segments $S_{inc}$ and $S_{dec}$ wherein
the time segment $S_{inc}$ is defined by

- a starting time $t_{inc}(0)$;

- a hydrogen concentration in said reactor at the starting time $t_{inc}(0)$ defined as $C_{inc}(0)$;

- an end time $t_{inc}(final)$;

- the length of time segment $S_{inc}$ is defined as

$$l(S_{inc}) = t_{inc}(final) - t_{inc}(0)$$

- a hydrogen concentration in said reactor at the end time $t_{inc}(final)$ defined as $c_{inc}(final)$; and

- the hydrogen concentration in said reactor at the starting time $t_{inc}(0)$ of said time segment $S_{inc}$ ($c_{inc}(0)$) is lower compared with the end time $t_{inc}(final)$ of said time segment $S_{inc}$ ($c_{inc}(final)$);

and wherein
the time segment $S_{dec}$ is defined by

- a starting time $t_{dec}(0)$;
- a hydrogen concentration in the reactor at the starting time $t_{dec}(0)$ defined as $C_{dec}(0)$;
- an end time $t_{dec}(final)$;
- the length of time segment $S_{dec}$ is defined as

$$l(S_{dec}) = t_{dec}(final) - t_{dec}(0)$$

- a hydrogen concentration in the reactor at the end time $t_{dec}(final)$ defined as $c_{dec}(final)$; and
- the hydrogen concentration in the reactor at the starting time $t_{dec}(0)$ of said time segment $S_{dec}$ ($C_{dec}(0)$) is higher compared with the end time $t_{dec}(final)$ of said time segment $S_{dec}$ ($c_{dec}(final)$).

Thus, the hydrogen concentration at the start of $S_{inc}$ is lower than at the end of $S_{inc}$ and the hydrogen concentration at the start of $S_{dec}$ is higher than at the end of $S_{dec}$.

The increase of the hydrogen concentration in the reactor during time segment $S_{inc}$ is preferably carried out according to the following equation (I)

$$c(t) = c_{inc}(0) + f_1(t) \cdot ppm/s \qquad (I)$$

wherein

$c(t)$        is the hydrogen concentration in the reactor at the time t
$c_{inc}(0)$    is the hydrogen concentration in the reactor at the starting time $t_{inc}(0)$ of time segment $S_{inc}$
$f_1(t)$        is a monotonically increasing function or a strictly monotonic increasing function; and

$$f_1(t_{inc}(0)) = 0 \text{ s}.$$

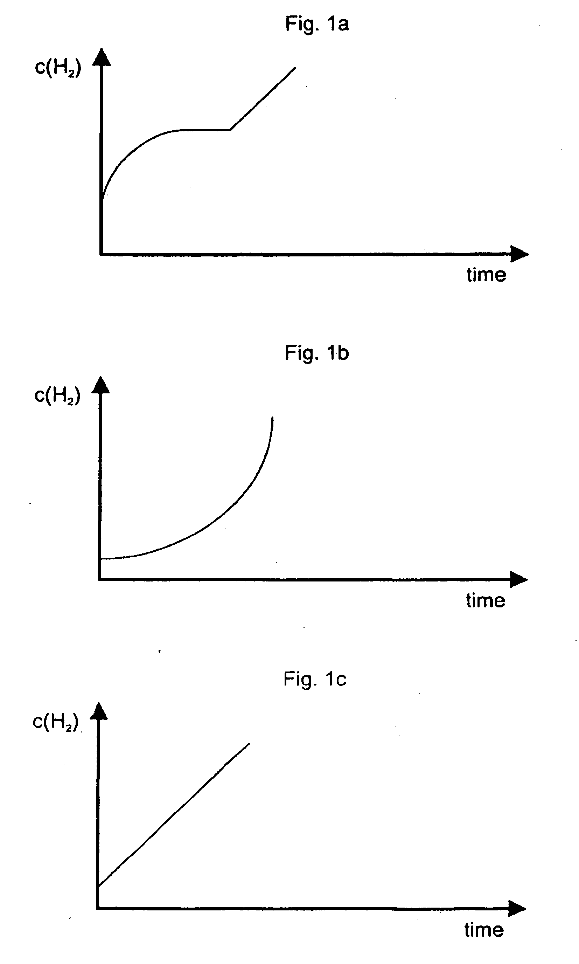

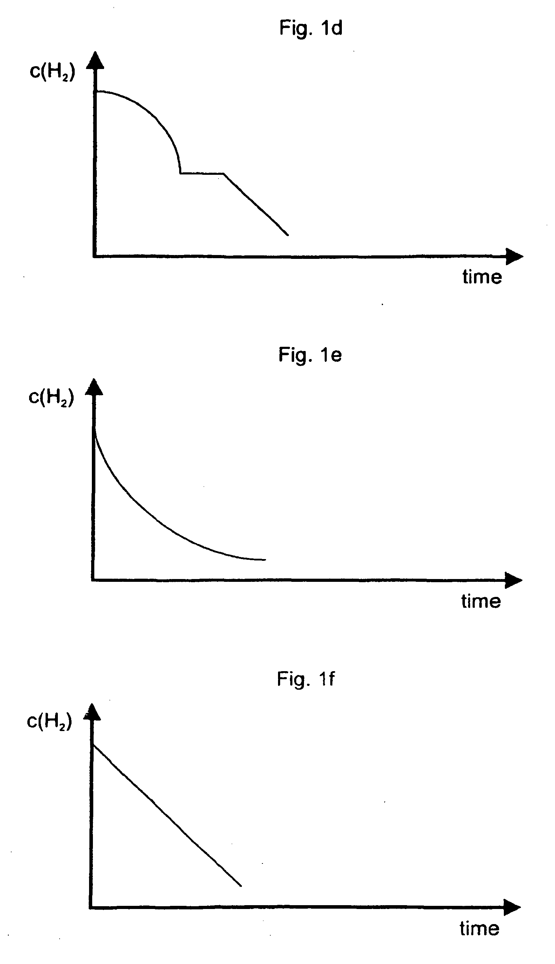

Preferably, $f_1(t)$ is a strictly monotonic increasing function and more preferably $f_1(t)$ is a linear increasing function.
Non-limiting examples for $S_{inc}$ are given in Fig. 1 a) to c), whereby

- in Fig. 1a) $f_1(t)$ is a monotonically increasing function;
- in Fig. 1b) $f_1(t)$ is a strictly monotonic increasing function; and
- in Fig. 1c) $f_1(t)$ is a linear increasing function

The decrease of the hydrogen concentration in the reactor during time segment $S_{dec}$ is preferably carried out according to the following equation (II)

$$c(t) = c_{dec}(0) + f_2(t) \cdot ppm/s \quad (II)$$

wherein

$c(t)$ is the hydrogen concentration in the reactor at the time t
$c_{dec}(0)$ is the hydrogen concentration in the reactor at the starting time $t_{dec}(0)$ of time segment $S_{dec}$
$f_2(t)$ is a monotonically decreasing function or a strictly monotonic decreasing function; and

$$f_2(t_{dec}(0)) = 0 \text{ s}.$$

Preferably, $f_2(t)$ is a strictly monotonic decreasing function and more preferably a linear decreasing function.
Non-limiting examples for $S_{inc}$ are given in Fig. 1 d) to e), whereby

- in Fig. 1d) $f_2(t)$ is a monotonically decreasing function;
- in Fig. 1e) $f_2(t)$ is a strictly monotonic decreasing function; and
- in Fig. 1f) $f_2(t)$ is a linear decreasing function.

A variation period may further comprise a time segment $S_{const}$ between time segment $S_{inc}$ and time segment $S_{dec}$ wherein the polymerization of the olefin homo- or copolymer is carried out at a constant hydrogen concentration $c_{const}$ in the reactor
whereby

- in case time segment $S_{inc}$ precedes time segment $S_{dec}$ preferably $c_{const} = c_{inc}(final)$;

- in case time segment $S_{dec}$ precedes time segment $S_{inc}$ preferably $c_{const} = c_{dec}(final)$;

and

- preferably, the length of time segment $S_{const}$ ($l(S_{const})$), if present is less than 10.0 hours, more preferably less than 5.0 hours, even more preferably less than 1.0 hour and most preferably less than 0.5 hours.

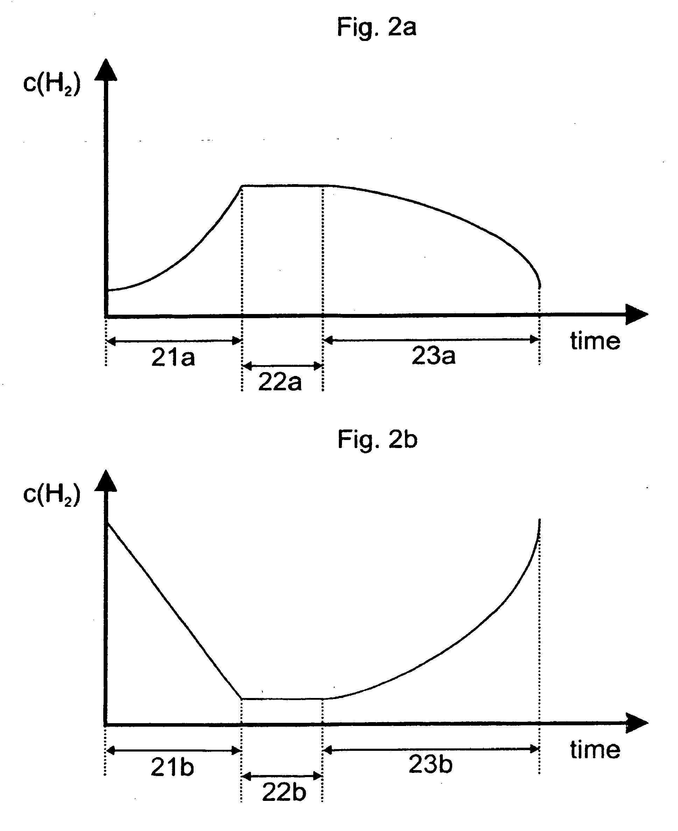

Non-limiting examples for a variation period comprising time segment $S_{const}$ between time segment $S_{inc}$ and time segment $S_{dec}$ are given in Fig. 2 a) and b) wherein

- in Fig 2a) 21 a corresponds to $S_{inc}$, 22a corresponds to $S_{const}$ and 23a corresponds to $S_{dec}$; and

- in Fig 2b) 21 b corresponds to $S_{dec}$, 22b corresponds to $S_{const}$ and 23b corresponds to $S_{inc}$.

Preferably one variation period consists of time segments $S_{inc}$, $S_{dec}$ and $S_{const}$ and more preferably one variation period consists of time segments $S_{inc}$ and $S_{dec}$.
In case $S_{inc}$ precedes $S_{dec}$ preferably $c_{inc}(final) = c_{dec}(0)$ and/or $c_{inc}(0) = c_{dec}(final)$, more preferably $c_{inc}(final) = c_{dec}(0)$ and $c_{inc}(0) = c_{dec}(final)$.

In case $S_{dec}$ precedes $S_{inc}$ preferably $c_{dec}(final) = c_{inc}(0)$ and/or $c_{dec}(0) = c_{inc}(final)$, more preferably $c_{dec}(final) = c_{inc}(0)$ and $c_{dec}(0) = c_{inc}(final)$.

In each variation period $S_{inc}$ preferably precedes $S_{dec}$. Thus, preferably the periodically variation starts with an increase of the hydrogen concentration in the reactor.

In case each variation period consist of time segments $S_{inc}$, $S_{dec}$ and $S_{const}$, the time of one variation period (P) is defined as

$$P = I(S_{inc}) + I(S_{dec}) + I(S_{const})$$

In case each variation period consist of time segments $S_{inc}$ and $S_{dec}$ the time of one variation period (P) is defined as

$$P = I(S_{inc}) + I(S_{dec})$$

The variation of the hydrogen concentration in the reactor is preferably carried out by varying the hydrogen concentration of the hydrogen/monomer feed.

When the hydrogen concentration of the hydrogen/monomer feed is increased or decreased the hydrogen concentration in the reactor is also increased or decreased respectively. However, the variation of the hydrogen concentration of the hydrogen/monomer feed is not equivalent to the hydrogen concentration in the reactor as the chemical system will normally require some time to respond to the chemical input.

The decrease of the hydrogen concentration in the reactor in each variation period is usually achieved by reducing the hydrogen concentration of the hydrogen/monomer feed.

The reduction of the hydrogen concentration of the hydrogen/monomer feed may be carried out by a monotonically decreasing or a strictly monotonic decreasing function.

Alternatively and preferably, the hydrogen concentration of the hydrogen/monomer feed is abruptly reduced, more preferably is abruptly reduced to the lower limit of the hydrogen concentration in said reactor is varied within.

Preferably, in case, one variation period comprises, more preferably consists of, two time segments $S_{inc}$ and $S_{dec}$, the hydrogen concentration of the hydrogen/monomer feed is reduced within time segment $S_{dec}$ to $c_{dec}(final)$, more preferably is abruptly reduced to $c_{dec}(final)$ within time segment $S_{dec}$ and most preferably is abruptly reduced to $C_{dec}(final)$ at $t_{dec}(0)$.

An abrupt reduction of the hydrogen concentration of the hydrogen/monomer feed leads to a decrease of the hydrogen concentration in the reactor owing to the consumption of the hydrogen present in the reactor.

Preferably, step (c) is preceded by the following step

(b) feeding one or more (co)monomers and hydrogen to the reactor, whereby the hydrogen concentration in the reactor remains constant.

Preferably, the time of one variation period (P) is at least 4.0 h, more preferably is at least 6.0 h, even more preferably is at least 8.0 h and most preferably is at least 10.0 h.

Further, preferably, the time of one variation period (P) is not more than 50 h, more preferably is not more than 40 h, even more preferably is not more than 30 h, even more preferably is not more than 25 h and most preferably is not more than 20 h.

Preferably, the average residence time ($\tau$) [(tau)] is at least 0.25 hours, more preferably is at least 0.50 hours, even more preferably is at least 0.75 hours even more preferably is at least 1.0 hour and most preferably is at least 1.25 hours.

Further, preferably, the average residence time ($\tau$) [(tau)] is not more than 3.0 hours, more preferably is not more than 2.5 hours, even more preferably is not more than 2.0 hours and most preferably is not more than 1.75 hours.

Preferably, the ratio $P/\tau$ [P/tau] is at least 3.0, even more preferably is at least 4.0, even more preferably is at least 5.0, even more preferably is at least 6.0 and most preferably at least 7.0.

Preferably, the ratio $P/\tau$ [P/tau] is not more than 50, more preferably is not more than 35, even more preferably is not more than 25, even more preferably is not more than 20, and most preferably is not more than 18.

In case each variation period consist of time segments $S_{inc}$, $S_{dec}$ and $S_{const}$, the time of one variation period (P) is defined as

$$P = I(S_{inc}) + I(S_{dec}) + I(S_{const})$$

In case each variation period consist of time segments $S_{inc}$ and $S_{dec}$ the time of one variation period (P) is defined as

$$P = I(S_{inc}) + I(S_{dec})$$

Preferably, $I(S_{inc})$ is at least is at least 2.0 hours, more preferably is at least 3.0 hours, more preferably is at least 4.0 hours and most preferably is at least 5.0 hours.

Further, preferably, $I(S_{inc})$ is not more than 20 hours, more preferably is not more than 15 hours, more preferably is not more than 12.5 hours and most preferably is not more than 10 hours.

Preferably, $I(S_{dec})$ is at least is at least 2.0 hours, more preferably is at least 3.0 hours, more preferably is at least 4.0 hours and most preferably is at least 5.0 hours.

Further, preferably, $I(S_{dec})$ is not more than 20 hours, more preferably is not more than 15 hours, more preferably is not more than 12.5 hours and most preferably is not more than 10 hours.

Preferably, in the processes according to the invention the propylene homo- or copolymer is subjected to not more than one variation period in the reactor.

**Degassing**

The obtained polypropylene homo- or copolymer is degassed (reaction stage (ii)). The purpose of this step is the removal of propylene still being present in the intermediate mixture. It should be understood that during degassing, polymerization will still continue. However, the relative amount of polymer material produced during degassing generally is less than 2.5 wt.-% with respect to the total of the produced polypropylene homo- or copolymer (A). Degassing can be effected in a separate reactor or in the reactor for producing component (A).

**Production of polyethylene homo- or copolymer (B)**

Reaction stage (iii) includes the further polymerization of the degassed intermediate product from stage (ii). Preferably, stage (iii) is carried out without any intermediate steps directly after stage (ii). The further polymerization of the degassed intermediate product from stage (ii) is preferably carried out using the still active catalyst in the intermediate product.

The reaction conditions in stage (iii) have to be adjusted such that the weight average molecular weight of the produced polyethylene homo- or copolymer is above 500 000 g/mol. Typically, the catalyst will be a catalyst as described above. Further the reaction temperatures will be in the range of 60 to 100 °C and the pressure will be in the range of 10 to 30 bar.

**Process for the production of the heterophasic polypropylene composition**

The process for the production of a heterophasic polypropylene composition according to the present invention comprises the preparation of a heterophasic polypropylene resin as described above and further blending said heterophasic polypropylene resin in at least one extruder with the reinforcement component, the inorganic filler talc and optionally elastomer and/or plastomer.

The heterophasic polypropylene composition according to the invention may be prepared by mixing together the components by any suitable method known in the art like twin screw extruders, Banbury mixers, 2- or 4-roll rubber mills or Buss co-kneaders. Preferably, the mixing will be performed in a twin screw extruder with one or more high intensity mixing segments and preferably at a temperature of 170 to 270 °C, more preferably of 180 to 250 °C.

**Use**

The present invention is also concerned with the use of a polyethylene homo- or copolymer (B) containing propylene units in an amount of less than 2 mol% as an impact modifier in polypropylene having a polydispersity index of at least 7.0 Pa$^{-1}$ determined according to ISO 6721-1.

**Articles**

The invention allows the production of article made of the inventive polypropylene composition. Preferably, said article can be pipes, car components, appliance housings and/or transport containers.

**Figures**

Fig. 1 a) to Fig. 1 c) show non-limiting examples for $S_{inc}$.

Fig. 1 d) to Fig. 1 f) show non-limiting examples for $S_{dec}$.

Fig. 2a) and 2b) show non-limiting examples for a variation period comprising time segment $S_{const}$ between time segment $S_{inc}$ and time segment $S_{dec}$.

In the following the present invention is further illustrated by means of non-limiting examples.

**Examples**

Definition of test methods:

The test specimen for the measurement of the tensile modulus, charpy notch impact strength, tensile properties, heat deflection temperature and shrinkage of the propylene homo- or copolymer (A) is consisting of 99.85 wt.-% of the propylene homo- or copolymer and as usual additives 0.05 wt.-% Tris(2,4-di-*tert*-butylphenyl)phosphite, 0.05 wt.-% Pentaerythritol Tetrakis(3-(3,5-di-*tert*-butyl-4-hydroxyphenyl)propionate (Irganox B225 distributed by Ciba Specialty chemicals) and 0.05 wt.-% Ca-Stearate ("SP" distributed by Faci).
Additives, like the above-mentioned, are routinely employed to stabilize polypropylenes. Without such additives the polypropylene would deteriorate during further processing. E.g. when preparing test specimen the polypropylene would deteriorate, leading to incorrect results.

**a) Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**b) Charpy notched impact test**

Charpy impact strength was determined according to ISO 179-1eA:2000 on V-notched samples of 80x10x4 mm$^3$ at +23 °C. The test specimens were prepared by injection moulding in line with ISO 1873-2.

**c) Tensile test**

Tensile tests are performed according to ISO 527-2 at +23 °C on injection molded specimen (type 1B, 4 mm thickness) prepared by injection moulding in line with ISO 1873-2.
The tensile modulus (E-modulus) was calculated from the linear part of said tensile test results, conducting that part of the measurement with an elongation rate of 5 mm/min.
For determining tensile stress at yield (in MPa), tensile strain at yield (in %), tensile strength (in MPa), tensile strain at tensile strength (in %), tensile stress at break (in MPa) and tensile strain at break (in %) the aforementioned tensile test according to ISO 527-2 at +23 °C was continued with an elongation rate of 50 mm/min until the specimen broke.

**d) Density**

Density of the polymer was measured according to ISO 1183/D on compression moulded specimens.

### e) NMR-spectroscopy measurements

The $^{13}$C-NMR spectra of polypropylenes were recorded on Bruker 400 MHz spectrometer at 130 °C from samples dissolved in 1,2,4-trichlorobenzene/benzene-d6 (90/10 w/w). For the pentad analysis the assignment is done according to the methods described in literature: (T. Hayashi, Y. Inoue, R. Chüjö, and T. Asakura, Polymer 29 138-43 (1988) and Chujo R, et al, Polymer 35 339 (1994). The NMR-measurement was used for determining the mmmm pentad concentration in a manner well known in the art.

### f) Complex viscosity and zero shear viscosity

Dynamic rheological measurements were carried out with an Anton Paar MCR501 rheometer on compression molded samples under nitrogen atmosphere at 230 °C using 25 mm diameter plate and plate geometry. A range of frequency ($\omega$) [(omega)] from 10-2 to $5.10^2$ was covered in the measurement. The complex viscosity, $\eta^*(\omega)$ [eta*(omega)], was calculated from the storage and loss moduli G',G"($\omega$) [G', G"(omega)] as

$$\eta^*(\omega) = (G'(\omega)^2 + G''(\omega)^2)^{1/2} / \omega$$

$$[eta^*(omega) = (G'(omega)^2 + G''(omega)^2)^{1/2} / omega]$$

For calculating the zero shear viscosity, validity of the Cox/Merz relation

$$\eta(\gamma') = \eta^*(\omega) \text{ for } \gamma' = \omega$$

$$[eta(gamma') = eta^*(omega) \text{ for } gamma = omega]$$

with $\gamma'$ [gamma'] being the shear rate was assumed. The zero shear viscosity, $\eta_0$ [eta$_0$], was then determined from the lower limit of the viscosity curve $\eta(\gamma')$ [eta(gamma')].

### g) Weight average molecular weight

The weight average molecular weight ($M_w$) was calculated from the zero shear viscosity ($\eta_0$) [eta$_0$] as resulting from a Cox-Merz conversion of the complex viscosity, and with the help of a calibration curve established in Grein et al. Rheol.Acta 46 (2007) 1083-1089.

### h) Polydispersity index (PI)

Dynamic rheological measurements were carried out with an Anton Paar MCR501 rheometer on compression molded samples under nitrogen atmosphere at 230 °C using 25 mm diameter plate and plate geometry. The oscillatory shear experiments were done within the linear viscoelastic range of strain at frequencies from 0.01 to 500 rad/s in line with ISO 6721-1.

The values of storage modulus (G'), loss modulus (G"), complex modulus (G*) and complex viscosity ($\eta^*$) [(eta*)] were obtained as a function of frequency ($\omega$) [(omega)]. The polydispersity index,

$$PI = 10^5/G_c,$$

is calculated from cross-over point of G'($\omega$) [G'(omega)] and G"($\omega$) [G"(omega)] at 230°C, for which

$$G'(\omega_c) = G''(\omega_c) = G_c \qquad [G'(omega_c) = G''(omega_c) = G_c]$$

holds.

j) Weight average molecular weight and molecular weight distribution by GPC measurements (polymers 5, 6 and 7 only)

The weight average molecular weight $M_w$ and the molecular weight distribution (MWD = $M_w/M_n$ wherein $M_n$ is the number average molecular weight and $M_w$ is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/l 2,6-di-*tert*-butyl-4-methyl-phenol) as solvent at 145 °C and at a constant flow rate of 1 ml/min. 216.5 microliter of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 ml (at 160 °C) of stabilized TCB (same as mobile phase) and keeping for 3 hours with continuous shaking prior sampling in into the GPC instrument.

**k) Terminal relaxation time $\lambda_T$ [lambda$_T$]**

To further determine the content of high molecular weight components decisive for crystallization and stiffness of the polymers and compositions based on the same, a terminal relaxation time ($\lambda_T$) [(lambda$_T$)] was calculated. For this, a continuous relaxation time spectrum $H(\lambda)$ [H(lambda)] was calculated from the storage and loss modulus data ($G',G''(\omega)$) [(G',G''(omega))] using the Rheoplus 123 Software V 2.66 of Anton Paar KG. The underlying calculation principles are for example described in T. Mezger, The Rheology Handbook, Vincentz Network 2006, pages 109-113. A bandwidth of 1% was set and 50 values of relaxation time $\lambda$ [lambda] pre-determined, using an automatic limit selection. The regularization parameter $\alpha$ was set at 0.01 and a cubic spline was used for smoothing. For characterizing the longest molecules present, a terminal relaxation time $\lambda_T$ [lambda$_T$] was calculated at a relaxation strength $H(\lambda)$ [H(lambda)] of 0.1 Pa.

**l) Heat DeflectionTemperature (HDT):**

The HDT was determined on injection molded test specimens of 80x10x4 mm$^3$ prepared according to ISO 1873-2 and stored at +23°C for at least 96 hours prior to measurement. The test was performed on flatwise supported specimens according to ISO 75, condition A, with a nominal surface stress of 1.80 MPa.

**m) Differential Scanning Calorimetry (DSC):**

DSC is run according to ISO 3146 / part 3 /method C2 in a heat / cool / heat cycle with a scan rate of 10 °C/min in the temperature range of +23 to +210°C. Crystallization temperature and enthalpy are determined from the cooling step, while melting temperature and melting enthalpy are determined from the second heating step.

**n) NMR-spectroscopy measurements:**

The $^{13}$C-NMR spectra of polypropylenes were recorded on Bruker 400 MHz spectrometer at 130°C from samples dissolved in 1,2,4-trichlorobenzene/benzene-d$_6$ (90/10 w/w). For the pentad analysis the assignment is done according to the methods described in literature: (T. Hayashi, Y. Inoue, R. Chüjö, and T. Asakura, Polymer 29 138-43 (1988) and Chujo R, et al, Polymer 35 339 (1994). The NMR-measurement was used for determining the mmmm pentad concentration in a manner well known in the art.

**o) Ethylene content:**

The relative amount of $C_2$ in the polymer (only for polymer 4) was measured with Fourier transform infrared spectroscopy (FTIR). When measuring the ethylene content in polypropylene, a thin film of the sample (thickness about 250 mm) was prepared by hot-pressing. The area of - CH$_2$- absorption peak (800-650 cm$^{-1}$) was measured with Perkin Elmer FTIR 1600 spectrometer. The method was calibrated by ethylene content data measured by $^{13}$C-NMR.

**p) Particle size (filler before compounding)**

The particle sizes d50 and d95 are calculated from the particle size distribution measured by laser diffraction according to ISO 13320-1:1999.

**q) Specific surface of filler**

The specific surface of the talc is determined according to DIN 66131/2.

**r) Average aspect ratio of filler**

The average aspect ratio has been determined by recording transmission electron microscopy (TEM) images of the pure inorganic filler prepared onto film-coated TEM grids from an aqueous suspension by rotating the sample in 1° intervals from -75° to +75° , e.g. with JEOL JEM-2100 microscope, and reconstructing the three dimensional structure (e.g. with the JEOL TEMography™ software). 100 particles were measured and the average calculated. The aspect ratio of a particle is the ratio of the longest and shortest particle radii that pass through the geometric centre of the particle.
In case of anisotropy in one dimension (fiber-like) or two dimensions (platelet-like) structures the geometric center equals the center of gravity of the particle.

**t) Weight average diameter of the dispersed phase**

The particle size distribution of the second polymer phase is determined from scanning electron micrographs, for which specimens of the respective materials are contrasted with ruthenium tetroxide ($RuO_4$) and cut, then investigated in an electron microscope. The micrographs are acquired in transmission on specimens contrasted with ruthenium tetroxide (RuO4). Injection moulded specimens identical to the ones used for flexural testing are cut perpendicular to the moulding direction into two equal parts, one of which is trimmed into a pyramid shape at the cut end. At the tip, a flat surface is produced with a glass knife. Subsequently, the specimen is stained by gaseous $RuO_4$. The continuous Ru layer formed at the surface is removed by ultramicrotomy with a diamond knife, which is then also used to produce the cuts for the microscope with a thickness of 50-100 nm. Magnifications of 10.000 to 30.000 have been found to be suitable to determine the particle size distribution.
For the examples, a Philips 300 TEM instrument was used in combination with direct recording of the image with a CCD camera in digital form.
Uncorrected profile size distributions are assumed to represent the particle size distribution. Weight average particle sizes are subsequently calculated from these distributions. Details of such determinations are described in the literature. Reference is made to Poelt et al. J. Appl. Polym. Sci. 78, 2000, 1152-61 which is herewith incorporated by reference.

**u) Scratch Resistance**

To determine the scratch resistance a Cross Hatch Cutter Model 42Op, manufactured by Erichsen, was used. For the tests, plaques of 70x70x4 mm size were cut from a molded grained plaque of size 140x200x4 mm (grain parameters average grain size = 1 mm, grain depth = 0.12 mm, conicity = 6°). The minimum period between injection molding of specimens and scratch-testing was 7 days. For testing the specimens must be clamped in a suitable apparatus as described above. Scratches are applied at a force of 10 N using a cylindrical metal pen with a ball shaped end (radius = 0.5 mm $\pm$ 0.01). A cutting speed of 1000 mm/min is used. A minimum of 20 scratches parallel to each other are brought up at a load of 10 N with a distance of 2 mm. The application of the scratches is repeated perpendicular to each other, so that the result is a scratching screen. The scratching direction shall be unidirectional. The scratch resistance is reported as the difference of the luminance ∆L of the unscratched from the scratched areas. ∆L can be measured using a spectrophotometer that fulfils the requirements to DIN 5033. Measured ∆L **values should be below a maximum of 1.5.** A detailed test description of the test method can be found in the article "Evaluation of scratch resistance in multiphase PP blends" by Thomas Koch and Doris Machl, published in POLYMER TESTING 26 (2007), p. 927-936.

**Monitoring of hydrogen concentration**

The hydrogen concentration in the reactor has been determined via online gas chromatography.

**Catalyst**

The catalyst has been prepared as defined in EP 0 491 566 A2; EP 0 591 224 B1 or EP 0 586 390 B1 (Ti = 1.9 wt.-%). Dicyclopentyl dimethoxy silane (DCPDMS) was used as donor and triethyl-aluminium (TEA) as cocatalyst with a TEA/$C_3$ ratio [g/kg] of 0.20 and a TEA/donor ratio [wt.-%/wt.-%] of 5.

**Modifiers and additives**

Irganox B225 is an antioxidant blend supplied by Ciba Specialty Chemicals(Switzerland) consisting of 50 wt.-% Irgafos 168 (Tris (2,4-di-t-butylphenyl) phosphate, CAS No. 31570-04-4) and 50 wt.-% Irganox 1010 (Pentaerythrityl-tetrakis(3-(3',5'-di-tert. butyl-4-hydroxyphenyl)-propionate, CAS No. 6683-19-8).

Calcium stearate used is the commercial type SP supplied by Faci (Italy) with CAS No. 1592-23-0.

Engage 8400 is an ethylene-octene copolymer (plastomer) produced by The Dow Chemical Company (USA) with an $MFR_2$ (190 °C) of 30.0 g/10min and a density of 0.870 $g/cm^3$.

Tital 15 is a jet-milled talc commercially available from Ankerpoort NV, NL. The top cut particle size is 7 micrometer, i.e. 95% of the particles are below that size according to ISO 787-7. The weight average particle size is 2 micrometer as determined according to ISO 13317-1, the specific surface area measured according to DIN 66131/2 is 10 $m^2$/g and the average aspect ratio is 7.5.

Plasblak PP3638 is a carbon black pigment masterbatch based on PP homopolymer comprising 30 wt% of carbon black and having an $MFR_2$ (230°C) of 10 g/10min.

Oleamide is the commercial additive Crodamide OR from Croda (UK) with CAS No. 301-02-0.

Polypropylene HD601CF is a propylene homopolymer having an $MFR_2$ of 8.0 g/10min and a density of 905 $kg/m^3$ commercially available from Borealis (AT). The polymer is further characterized by a melting point as determined by DSC of 165 °C, a weight average molecular weight $M_w$ of 367 kg/mol, a polydispersity index of 3.5 $Pa^{-1}$ and a terminal relaxation time $\lambda_T$ (lambda$_T$) of 1420 s.

Polypropylene WB180HMS is a long-chain branched propylene homopolymer having an $MFR_2$ of 6.0 g/10min and a density of 905 $kg/m^3$ commercially available from Borealis (AT). It has a branching index g' of 0.64 and in the Rheotens test it is characterized by a melt strength of 11.5 cN at a maximum speed of 242 mm/s.

**Preparation of the experimental heterophasic PP copolymer XPP1802**

Prepolymerization

The catalyst was fed in paste form at a concentration of 100 g/l in a mixture of 70 vol% paraffin oil and 30 vol% vaseline fat, prepolymerized in liquid propylene at 20 °C in a stirred prepolymerization reactor having an average residence time of 7 minutes. The actual polymerization was carried out in a single loop reactor at a temperature of 62 °C and a pressure of 3400 kPa, starting by feeding propylene at a rate of 70 kg/h with 80 ppm of hydrogen ($c_0$), corresponding to an $MFR_2$ of 0.1 g/10min, for which a loop density of 520 $kg/m^3$ was adjusted (corresponding to an average residence time $\tau$ [tau] of 1.5 h) before starting the variation period. At to = 0 the polymer collection was started. Beginning 2 hours after to the hydrogen concentration in the reactor was increased linearly over time by adjusting the hydrogen concentration of the hydrogen/monomer feed in such a way that a maximum concentration ($C_{max}$) of 10000 ppm (corresponding to an $MFR_2$ of 80 g/min) was reached in the reactor 9 hours after to, and the hydrogen concentration of the hydrogen/monomer feed was reduced back to 80 ppm ($T_I$ = 7 h). The polymerization was continued and within a time of 9 h the original hydrogen concentration of 80 ppm in the reactor could be reached ($T_R$ = 9 h), meaning that the time of one variation period P was 16 h and the ratio between P and $\tau$ [tau] was 10.67.

Degassing

The polymer powder was transferred to a gas phase reactor with stirred bed and a minimal propylene feed of less than 5 kg/h at 60°C and 1500 kPa without additional hydrogen to achieve a consumption of residual monomer.

Production of component (B)

The polymer powder was transferred to a second gas phase reactor with stirred bed and pure ethylene feed of 20 kg/h with 80 ppm hydrogen at 80°C and 2000 kPa.

Compounding

Following deactivation of the catalyst with steam and drying of the resulting polymer powder with warm nitrogen, the resulting polymer was transferred to a powder mixing silo and homogenized, then the resulting polypropylene copolymer was compounded together with 0.05 wt.-% Calcium Stearate and 0.60% Irganox B225 in a twin screw extruder (type Coperion W&P ZSK57) at 270 to 300 °C. The resulting polymer has an $MFR_2$ of 10.5 g/10 min, a density of 905 $kg/m^3$ and a total ethylene content of 6.5 wt.-%. Detail analysis shows that the propylene homopolymer component (A) of XPP1802 has a melting point of 165 °C, a weight average molecular weight $M_w$ of 620 kg/mol, a polydispersity index of 8.4 Pa$^{-1}$ and a terminal relaxation time $\lambda_T$ (lambda$_T$) of 7310 s. The ethylene copolymer component (B) is present in an amount of 6.9 wt.-%, having a melting point of 124°C corresponding to a propylene comonomer content of 5.0 wt.-%. Morphological analysis of the total polymer shows that the ethylene copolymer component (B) is dispersed in the propylene homopolymer component (A) in particles having a weight average diameter of 0.3 $\mu$m.

**Preparation of the experimental ultrahigh molecular weight PP homopolymer XPP 1830**

The experimental polypropylene homopolymer has been produced in a Borstar PP pilot plant as follows: The catalyst has been prepared as defined in EP 0 591 224 B1 (Ti = 1.9 wt.-%), cyclohexyl methylmethoxy silane (CHMMS) was used as donor and triethyl-aluminium (TEA) as cocatalyst with a TEA/C$_3$ ratio [g/kg] of 0.20 and a TEA/donor ratio [wt.-%/wt.-%] of 15. The catalyst was fed in paste form at a concentration of 100 g/l in a mixture of 70 vol% paraffin oil and 30 vol% vaseline fat, prepolymerized in liquid propylene at 20 °C in a stirred prepolymerization reactor having an average residence time of 7 minutes.

The actual polymerization was started in a loop reactor at a temperature of 70 °C and a pressure of 3500 kPa feeding propylene at a rate of 65,8 kg/h in absence of hydrogen, the resulting polymer powder being transferred to a first gas phase reactor operated at 85°C and a pressure of 1200 kPa, again feeding only propylene without hydrogen, the now resulting polymer powder being again transferred to a second gas phase reactor operated at 85°C and a pressure of 1200 kPa, feeding propylene with 730 ppm hydrogen to reduce the molecular weight of the polymer produced in this step. The residence time in the three reactors was selected such as to achieve a production of 75 wt.-% in the loop reactor, 16 wt.-% in the first gas phase reactor and 9 wt.-% in the second gas phase reactor; an overall catalyst productivity of 19.8 kg/g was achieved. Following deactivation of the catalyst with steam and drying of the resulting polymer powder with warm nitrogen, the resulting polypropylene homopolymer was compounded together with 0.07 wt.-% Calcium Stearate (SP distributed by Faci) and 0.60 wt.-% Irganox B225 (antioxidant combination supplied by Ciba Specialty Chemicals) in a twin screw extruder at 270 to 300 °C. Before compounding an MFR$_{21}$ value of 2.50 g/10min was determined on the powder, while after compounding an MFR$_{21}$ value of 3.50 g/10min and an MFR$_2$ value of 0.03 g/10min were determined. The polymer is further characterized by an XS content of 1.7 wt.-%, an intrinsic viscosity of 6.88 dl/g, a melting point as determined by DSC of 167 °C, a weight average molecular weight M$_w$ of 1340 kg/mol and a polydispersity index of 3.7 Pa$^{-1}$.

**Preparation of final compositions (examples and comparative examples)**

The final compositions were compounded in a twin screw extruder (PRISM TSE24 L/D ratio 40) with two high intensity mixing segments at temperatures between 190 and 240°C at a throughput of 10 kg/h and a screw speed of 50 rpm.

**Properties**

The properties of the obtained heterophasic materials are shown in the following tables 1 and 2.

| | Table 1 - Non-spiked compositions | | | | | |
|---|---|---|---|---|---|---|
| | | unit | Example 1 | Example 2 | Comp. Ex.1 | Comp. Ex.2 |
| A,B | PP-HECO type | - | XPP1802 | XPP1802 | XPP1802 | HD601CF |
| E | Elastomer type | - | - | Engage 8400 | - | - |
| | Elastomer amount | wt.-% | 0 | 5 | 0 | 0 |
| | Ca-stearate | wt.-% | 0.1 | 0.1 | 0.1 | 0.05 |
| | Irganox B225 | wt.-% | 0.25 | 0.25 | 0.25 | 0.25 |
| | Oleamide | wt.-% | 0.15 | 0.15 | 0.15 | 0.15 |
| | CB-MB PP3638 | wt.-% | 2.00 | 2.00 | 2.00 | 2.00 |

(continued)

| Table 1 - Non-spiked compositions | | | | | | |
|---|---|---|---|---|---|---|
| | | unit | Example 1 | Example 2 | Comp. Ex.1 | Comp. Ex.2 |
| D | Talc Tital 15 | wt.-% | 15 | 15 | 0 | 15 |
| | MFR 230°C/2,16kg | g/10ml n | 9.0 | 8.0 | 9.0 | 8.0 |
| | Flexural modulus | MPa | 2830 | 2580 | 1590 | 2770 |
| | Charpy NIS +23°C | kJ/m$^2$ | 3.3 | 3.9 | 2.5 | 3.2 |
| | HDT ISO75A | °C | 65 | 60 | 55 | 64 |
| | Scratch $\Delta$L 10N | % | 1.4 | 1.0 | 0.0 | 5.6 |

Table 1 shows the massive stiffness increase when combining a base polymer with the filler, resulting in acceptable levels of scratch resistance in case of the inventive compositions.

| Table 2 - Spiked compositions | | | | | | |
|---|---|---|---|---|---|---|
| | | unit | Example 3 | Example 4 | Comp.Ex.3 | Comp.Ex.4 |
| A,B | PP-HECO type | - | XPP1802 | XPP1802 | HD601CF | HD601CF |
| C | PP-Spike type | - | XPP1830 | WB180HM S | XPP1830 | WB180HM S |
| | PP-Spike amount | wt.-% | 3 | 3 | 3 | 3 |
| E | Elastomer type | - | Engage 8400 | Engage 8400 | Engage 8400 | Engage 8400 |
| | Elastomer amount | wt.-% | 5 | 5 | 5 | 5 |
| | Ca-stearate | wt.-% | 0.1 | 0.1 | 0.05 | 0.05 |
| | Irganox B225 | wt.-% | 0.25 | 0.25 | 0.25 | 0.25 |
| | Oleamide | wt.-% | 0.15 | 0.15 | 0.15 | 0.15 |
| | CB-MB PP3638 | wt.-% | 2.00 | 2.00 | 2.00 | 2.00 |
| D | Talc Tital 15 | wt.-% | 15 | 15 | 15 | 15 |
| | MFR 230°C/2,16kg | g/10ml | 5.0 | 9.0 | 5.0 | 5.0 |
| | Flexural modulus | MPa | 2540 | 2630 | 2510 | 2580 |
| | Charpy NIS +23°C | kJ/m$^2$ | 3.8 | 3.9 | 4.6 | 4.5 |
| | HDT ISO75A | °C | 61 | 62 | 60 | 62 |
| | Scratch $\Delta$L 10N | % | 0.8 | 0.8 | 1.8 | 1.8 |

Table 2 shows that the further addition of an ultrahigh molecular weight polypropylene or a high melt strength polypropylene further improves the scratch resistance of the inventive compositions.

## Claims

1. Composition comprising

a heterophasic polypropylene resin,
a reinforcement component (C) and
an inorganic filler (D), the inorganic filler being talc,

whereby the heterophasic polypropylene resin comprises at least a first phase comprising a propylene homo- or copolymer (A), wherein the propylene homo- or copolymer (A) has a polydispersity index of at least 7.0 Pa$^{-1}$ determined according to ISO 6721-1, and
a second phase being present in the form of particles being dispersed in the first phase comprising a polyethylene copolymer (B), wherein the amount of comonomer units of copolymer (B) is less than 10 wt.-%,

2. A composition comprising a heterophasic polypropylene resin according to claim 1 whereby the particles forming the second phase have a weight average diameter of 2 micrometer or less determined by electron microscopy on contrasted specimens cut from compression molded plaques.

3. A composition comprising a heterophasic polypropylene resin according to claim 1 or 2, wherein the weight ratio of propylene homo- or copolymer (A) to polyethylene homo- or copolymer (B) is from 98 / 2 to 80 / 20.

4. A composition comprising a heterophasic polypropylene resin according to any of the preceding claims wherein the amount of propylene homo- or copolymer (A) being insoluble in boiling p-xylene at 1013 hPa is between 2.0 wt.-% to 8 wt.-% with respect to the total of the propylene homo- or copolymer (A).

5. A composition comprising a heterophasic polypropylene resin according to any of the preceding claims wherein the propylene homo- or copolymer (A) has an isotacticity expressed in mmmm pentads of at least 97 %, measured by means of $^{13}$C-NMR.

6. A composition comprising a heterophasic polypropylene resin according to any of the preceding claims, wherein the polyethylene homo- or copolymer (B) contains propylene units in an amount of less than 5 wt.-% with respect to the total of the polyethylene homo-or copolymer (B).

7. A composition according to any of the preceding claims, whereby the heterophasic composition optionally has an $MFR_2$, determined according to ISO 1133 at 230 °C and under a load of 2.16 kg, from 2.0 to 60 g/10 min.

8. A composition comprising a heterophasic polypropylene composition according to any of the preceding claims comprising a modifier selected from the group of elastomers and/or plastomers (E).

9. A composition comprising a heterophasic polypropylene composition according to any of the preceding claims, wherein C + D + E is present in an amount of 5 to 40 wt.-% with respect to the total of the heterophasic polypropylene composition.

10. A composition comprising a heterophasic polypropylene composition according to any of the preceding claims, whereby the reinforcing component (C) is selected from

(C1) propylene homo- or copolymers having a weight average molecular weight of at least 900 kg/mol or
(C2) polypropylene homo- or copolymers having a branching index g of 0.9 or higher.

11. A composition comprising a heterophasic polypropylene composition according to claim 10, whereby the amount of reinforcing component (C) is from 2 to 10 wt.-%.

12. A composition comprising a heterophasic polypropylene composition according to any of the preceding claims, wherein the inorganic filler talc is present in an amount of 3 to 25 wt.-% with respect to the total of the heterophasic polypropylene composition.

13. A composition comprising a heterophasic polypropylene composition according to any of the preceding claims, obtainable by compounding the inorganic filler talc with an average aspect ratio before compounding of above 5.0.

14. A composition comprising a heterophasic polypropylene composition according to any of claims 9 to 13, whereby the elastomer or plastomer (E) is selected from the group of ethylene propylene rubbers, ethylene propylene diene rubber, and linear low density polyethylene which is made by a single site catalyst and has a density of below 900 kg/m$^3$.

15. A composition comprising a heterophasic polypropylene composition according to any of claims 9 to 14, whereby the elastomer or plastomer (E) is present in amount of 0.1 to 15 wt.-%.

16. A composition comprising a heterophasic polypropylene composition according to any of claims 7 to 15, wherein the heterophasic polypropylene composition has a flexural modulus determined according to ISO 178 in a three point bending on a test specimen prepared by injection molding according to ISO 1873-2 of at least 2300 MPa.

17. A process for the production of a composition according to claim 1 comprising a heterophasic polypropylene resin comprising

(i) polymerizing propylene and optionally one or more comonomers in the presence of hydrogen, whereby the hydrogen concentration in the reactor is periodically varied and whereby the relation $\dfrac{P}{\tau} > 2.0$, P being the time of one variation period of the hydrogen concentration in the reactor; and $\tau$ being the average residence time of the polymer in the reactor is fulfilled;

(ii) degassing the obtained intermediate product,

(iii) further polymerizing the reaction product of step (ii), having a polydispersity index of at least 7.0 Pa$^{-1}$ determined according to ISO 6721-1, in the presence of ethylene under conditions such that the produced polyethylene homo- or copolymer with a weight average molecular weight $M_w$ of above 500 000 g/mol is obtained, wherein the amount of comonomer units of the polyethylene copolymer is less than 10 wt%.

and further blending the heterophasic polypropylene resin in at least one extruder with the reinforcement component (C), the inorganic filler talc (D) and optionally an elastomer and/or plastomer (E).

18. Process according to claim 17, whereby the polymerization catalyst is a Ziegler-Natta catalyst comprising an external donor of formula (1) R$_1$n[(R$_2$)N]mSi(O-R$_3$)$_4$-n-m whereby R$_1$ and R$_2$ can be the same or different and independently represent a linear, branched or cyclic aliphatic or aromatic group, R$_3$ is methyl or ethyl, n is an integer of 0 to 3; m is an integer of 0 to 3; and n+m is 1 to 3.

**Patentansprüche**

1. Zusammensetzung, umfassend

ein heterophasisches Polypropylenharz,
eine Verstärkungskomponente (C) und
einen anorganischen Füllstoff (D),
wobei der anorganische Füllstoff Talk ist,
wobei das heterophasische Polypropylenharz mindestens eine erste Phase, umfassend ein Propylen Homo- oder Copolymer (A), umfasst, wobei das Propylen Homo- oder Copolymer (A) einen Polydispersitätsindex von mindestens 7,0 Pa$^{-1}$, bestimmt gemäß ISO 6721-1, hat und
eine zweite Phase, die in der ersten Phase in Form von Partikeln dispergiert ist, umfassend ein Polyethylen Homo- oder Copolymer (B), wobei die Menge an Comonomereinheiten von Comonomer (B) weniger als 10 Gewichtsprozent beträgt.

2. Zusammensetzung umfassend ein heterophasisches Polypropylenharz gemäß Anspruch 1, wobei die Partikel, die die zweite Phase bilden, einen gewichtsdurchschnittlichen Durchmesser von 2 Mikrometern oder weniger haben, welcher durch Elektronenmikroskopie von kontrastierten Probenkörpern, die aus formgepressten Platten geschnitten wurden, bestimmt wird.

3. Zusammensetzung umfassend ein heterophasisches Polypropylenharz gemäß Anspruch 1 oder 2, wobei das Gewichtsverhältnis von Propylen Homo- oder Copolymer (A) zu Polyethylen Homo- oder Copolymer (B) von 98 / 2 bis 80 / 20 beträgt.

4. Zusammensetzung umfassend ein heterophasisches Polypropylenharz gemäß einem der vorhergehenden Ansprüche, wobei die Menge an Propylen Homo- oder Copolymer (A), welche in kochendem p-Xylol bei 1013 hPa unlöslich ist, zwischen 2,0 Gewichtsprozent bis 8 Gewichtsprozent, bezogen auf das gesamte Propylen Homo- oder Copolymer (A), liegt.

5. Zusammensetzung umfassend ein heterophasisches Polypropylenharz gemäß einem der vorhergehenden Ansprüche, wobei das Propylen Homo- oder Copolymer (A) eine Isotaktizität ausgedrückt in mmmm Pentaden von min-

destens 97 %, gemessen mittels $^{13}$C-NMR, hat.

6. Zusammensetzung umfassend ein heterophasisches Polypropylenharz gemäß einem der vorhergehenden Ansprüche, wobei das Polyethylen Homo- oder Copolymer (B) Propyleneinheiten in einer Menge von weniger als 5 Gewichtsprozent, bezogen auf das gesamte Polyethylen Homo- oder Copolymer (B), beinhaltet.

7. Zusammensetzung gemäß einem der vorhergehenden Ansprüche, wobei die heterophasische Zusammensetzung optional einen MFR$_2$, bestimmt gemäß ISO 1133 bei 230°C und unter einer Last von 2,16 kg, von 2,0 bis 60 g/10 min hat.

8. Zusammensetzung umfassend eine heterophasische Polypropylenzusammensetzung gemäß einem der vorhergehenden Ansprüche, welche ein Modifikationsmittel (E), ausgewählt aus der Gruppe der Elastomere und / oder Plastomere, umfasst.

9. Zusammensetzung umfassend eine heterophasische Polypropylenzusammensetzung gemäß einem der vorhergehenden Ansprüche, wobei C + D + E in einer Menge von 5 bis 40 Gewichtsprozent, bezogen auf die gesamte heterophasische Polypropylenzusammensetzung, vorhanden sind.

10. Zusammensetzung umfassend eine heterophasische Polypropylenzusammensetzung gemäß einem der vorhergehenden Ansprüche, wobei die verstärkende Komponente (C) aus

(C1) Propylen Homo- oder Copolymeren mit einem gewichtsdurchschnittlichen Molekulargewicht von mindestens 900 kg/mol oder
(C2) Polypropylen Homo- oder Copolymeren mit einem Verzweigungsindex g von 0,9 oder höher,

ausgewählt wird.

11. Zusammensetzung umfassend eine heterophasische Polypropylenzusammensetzung gemäß Anspruch 10, wobei die Menge an verstärkender Komponente (C) von 2 bis 10 Gewichtsprozent beträgt.

12. Zusammensetzung umfassend eine heterophasische Polypropylenzusammensetzung gemäß einem der vorhergehenden Ansprüche, wobei der anorganische Füllstoff Talk in einer Menge von 3 bis 25 Gewichtsprozent, bezogen auf die gesamte heterophasische Polypropylenzusammensetzung, vorhanden ist.

13. Zusammensetzung umfassend eine heterophasische Polypropylenzusammensetzung gemäß einem der vorhergehenden Ansprüche, erhältlich durch Vermengen des anorganischen Füllstoffs Talk mit einem durchschnittlichen Aspektverhältnis vor dem Vermengen von über 5,0.

14. Zusammensetzung umfassend eine heterophasische Polypropylenzusammensetzung gemäß einem der Ansprüche 9 bis 13, wobei das Elastomer oder Plastomer (E) aus der Gruppe von Ethylen-Propylen-Gummis, Ethylen-Propylen-Dien-Gummis und linearem Polyethylen niedriger Dichte, welches mit Hilfe eines Single Site-Katalysators hergestellt wird und eine Dichte von unter 900 kg/m$^3$ hat, ausgewählt wird.

15. Zusammensetzung umfassend eine heterophasische Polypropylenzusammensetzung gemäß einem der Ansprüche 9 bis 14, wobei das Elastomer oder Plastomer (E) in einer Menge von 0,1 bis 15 Gewichtsprozent vorhanden ist.

16. Zusammensetzung umfassend eine heterophasische Polypropylenzusammensetzung gemäß einem der Ansprüche 7 bis 15, wobei die heterophasische Polypropylenzusammensetzung ein Biegemodul, bestimmt gemäß ISO 178 in einem Dreipunkt-Biegen mit einem Testprobenkörper, die mittels Spritzgießen gemäß ISO 1873-2 hergestellt wurde, von mindestens 2300 MPa hat.

17. Verfahren zur Herstellung einer Zusammensetzung gemäß Anspruch 1, welche ein heterophasisches Polypropylenharz umfasst, umfassend

(i) Polymerisieren von Propylen und optional einem oder mehreren Comonomeren in der Anwesenheit von Wasserstoff, wobei die Wasserstoffkonzentration im Reaktor periodisch variiert wird und wobei die Relation

$$\frac{P}{\tau} > 2.0\,,$$ wobei P die Zeit einer Variationsperiode der Wasserstoffkonzentration im Reaktor ist und $\tau$ die durchschnittliche Aufenthaltszeit des Polymers im Reaktor ist, erfüllt ist;

(ii) Entgasen des erhaltenen Zwischenprodukts;

(iii) weiteres Polymerisieren des Reaktionsprodukts aus Schritt (ii), welches einen Polydispersitätsindex von mindestens 7,0 Pa$^{-1}$, bestimmt gemäß ISO 6721-1, in der Anwesenheit von Ethylen unter Bedingungen, so dass das hergestellte Polyethylen Homo- oder Copolymer mit einem gewichtsdurchschnittlichen Molekulargewicht $M_w$ von über 500.000 g/mol erhalten wird, wobei die Menge an Comonomereinheiten des Polyethylencopolymers weniger als 10 Gewichtsprozent beträgt,

und ferner Mischen des heterophasischen Polypropylenharzes in mindestens einem Extruder mit der Verstärkungskomponente (C), dem anorganischen Füllstoff Talk (D) und optional einem Elastomer und / oder Plastomer (E).

18. Verfahren gemäß Anspruch 17, wobei der Polymerisationskatalysator ein Ziegler-Natta Katalysator ist, der einen externen Donor der Formel (1) $R_1n[(R_2)N]mSi(O-R_3)_{4-n-m}$ umfasst, wobei $R_1$ und $R_2$ gleich oder unterschiedlich sein können und unabhängig voneinander eine lineare, verzweigte oder zyklische aliphatische oder aromatische Gruppe repräsentieren, $R_3$ Methyl oder Ethyl ist, n eine ganze Zahl von 0 bis 3 ist, m eine ganze Zahl von 0 bis 3 ist und n+m 1 bis 3 ist.

**Revendications**

1. Composition comprenant

une résine de polypropylène hétérophasique,
un composant de renforcement (C), et
une charge inorganique (D), la charge inorganique étant du talc,
moyennant quoi la résine de polypropylène hétérophasique comprend au moins une première phase comprenant un homo- ou copolymère de propylène (A), dans laquelle l'homo- ou copolymère de propylène (A) présente un indice de polydispersité, déterminé conformément à la norme ISO 6721-1, d'au moins 7,0 Pa$^{-1}$, et
une deuxième phase étant présente sous la forme de particules étant dispersées lors de la première phase comprenant un homo-ou copolymère de polyéthylène (B), dans laquelle la quantité des motifs comonomères du comonomère (B) est inférieure à 10 % en poids.

2. Composition comprenant une résine de polypropylène hétérophasique selon la revendication 1, moyennant quoi les particules formant la deuxième phase possèdent un diamètre moyen en poids inférieur ou égal à 2 micromètres, déterminé par microscopie électronique sur des échantillons contrastés découpés dans des plaques moulées par compression.

3. Composition comprenant une résine de polypropylène hétérophasique selon la revendication 1 ou 2, dans laquelle le rapport en poids de l'homo- ou copolymère de propylène (A) sur l'homo- ou copolymère de polyéthylène (B) va de 98/2 à 80/20.

4. Composition comprenant une résine de polypropylène hétérophasique selon l'une quelconque des revendications précédentes, dans laquelle la quantité d'homo- ou copolymère de propylène (A) étant insoluble dans le p-xylène bouillant à 1013 hPa est comprise entre 2,0 % en poids et 8 % en poids par rapport au total de l'homo- ou copolymère de propylène (A).

5. Composition comprenant une résine de polypropylène hétérophasique selon l'une quelconque des revendications précédentes, dans laquelle l'homo- ou copolymère de propylène (A) présente une isotacticité, exprimée en pentades mmmm, d'au moins 97 %, telle que mesurée au moyen d'une RMN-$^{13}$C.

6. Composition comprenant une résine de polypropylène hétérophasique selon l'une quelconque des revendications précédentes, dans laquelle l'homo- ou copolymère de polyéthylène (B) contient des motifs propylène en une quantité inférieure à 5 % en poids par rapport au total de l'homo- ou copolymère de polyéthylène (B).

7. Composition selon l'une quelconque des revendications précédentes, moyennant quoi la composition hétérophasique présente facultativement un indice MFR$_2$, déterminé conformément à la norme ISO 1133 à 230 °C et sous une charge de 2,16 kg, allant de 2,0 à 60 g/10 min.

8. Composition comprenant une composition de polypropylène hétérophasique selon l'une quelconque des revendications précédentes, comprenant un modificateur choisi parmi le groupe d'élastomères et/ou de plastomères (E).

9. Composition comprenant une composition de polypropylène hétérophasique selon l'une quelconque des revendications précédentes, dans laquelle la somme C + D + E est présente en une quantité de 5 à 40 % en poids par rapport au total de la composition de polypropylène hétérophasique.

10. Composition comprenant une composition de polypropylène hétérophasique selon l'une quelconque des revendications précédentes, moyennant quoi le composant de renforcement (C) est choisi parmi

(C1) les homo- ou copolymères de propylène présentant une masse moléculaire moyenne en masse d'au moins 900 kg/mol, et
(C2) les homo- ou copolymères de polypropylène présentant un indice de ramification g supérieur ou égal à 0,9.

11. Composition comprenant une composition de polypropylène hétérophasique selon la revendication 10, moyennant quoi la quantité de composant de renforcement (C) va de 2 à 10 % en poids.

12. Composition comprenant une composition de polypropylène hétérophasique selon l'une quelconque des revendications précédentes, dans laquelle la charge inorganique, le talc, est présente en une quantité de 3 à 25 % en poids par rapport au total de la composition de polypropylène hétérophasique.

13. Composition comprenant une composition de polypropylène hétérophasique selon l'une quelconque des revendications précédentes, pouvant être obtenue par combinaison de la charge inorganique, le talc, avec un rapport d'aspect moyen avant combinaison supérieur à 5,0.

14. Composition comprenant une composition de polypropylène hétérophasique selon l'une quelconque des revendications 9 à 13, moyennant quoi l'élastomère ou le plastomère (E) est choisi parmi le groupe des caoutchoucs d'éthylène-propylène, le caoutchouc d'éthylène-propylène-diène, et le polyéthylène à basse densité linéaire préparés au moyen d'un catalyseur à site unique et présente une masse volumique inférieure à 900 kg/m$^3$.

15. Composition comprenant une composition de polypropylène hétérophasique selon l'une quelconque des revendications 9 à 14, moyennant quoi l'élastomère ou le plastomère (E) est présent en une quantité allant de 0,1 à 15 % en poids.

16. Composition comprenant une composition de polypropylène hétérophasique selon l'une quelconque des revendications 7 à 15, dans laquelle la composition de polypropylène hétérophasique possède un module en flexion, déterminé conformément à la norme ISO 178 par flexion en trois points sur une éprouvette préparée par moulage par injection conformément à la norme ISO 1873-2, d'au moins 2300 MPa.

17. Procédé de production d'une composition selon la revendication 1 comprenant une résine de polypropylène hétérophasique, comprenant

(i) la polymérisation de propylène et facultativement d'un ou plusieurs comonomères en présence d'hydrogène, moyennant quoi la concentration d'hydrogène dans le réacteur varie périodiquement et moyennant quoi la relation $\dfrac{P}{\tau} > 2,0$, où P étant le temps d'une période de variation de la concentration d'hydrogène dans le réacteur ; et $\tau$ étant le temps de séjour moyen du polymère dans le réacteur, est satisfaite ;
(ii) le dégazage du produit intermédiaire obtenu ;
(iii) la polymérisation supplémentaire du produit réactionnel de l'étape (ii), possédant un indice de polydispersité, déterminé conformément à la norme ISO 6721-1, d'au moins 7,0 Pa$^{-1}$, en présence d'éthylène et dans des conditions telles que soit obtenu l'homo- ou copolymère de polyéthylène produit présentant une masse moléculaire moyenne en masse M$_w$ supérieure à 500 000 g/mol, dans lequel la quantité des motifs comonomères du copolymère de polyéthylène est inférieure à 10 % en poids,

et en outre le mélange de la résine de polypropylène hétérophasique dans au moins une extrudeuse avec le composant de renforcement (C), la charge inorganique, le talc (D), et facultativement un élastomère et/ou un plastomère (E).

18. Procédé selon la revendication 17, moyennant quoi le catalyseur de polymérisation est un catalyseur de Ziegler-Natta comprenant un donneur externe de formule (1) $R_{1n}[(R_2)N]_mSi(O\text{-}R_3)_{4\text{-}n\text{-}m}$ moyennant quoi $R_1$ et $R_2$ peuvent être identiques ou différents et représentent indépendamment un groupe aromatique ou aliphatique linéaire, ramifié ou cyclique, $R_3$ est un méthyle ou un éthyle, n est un entier allant de 0 à 3, m est un entier allant de 0 à 3, et n+m vaut de 1 à 3.

Fig. 1a

Fig. 1b

Fig. 1c

## Fig. 1d

## Fig. 1e

## Fig. 1f

## Fig. 2a

## Fig. 2b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008006586 A
- US 2933480 A
- US 3093620 A
- US 3884993 A
- US 5712353 A
- US 5278272 A
- US 5324800 A
- EP 591224 A
- WO 9426794 A
- EP 0491566 A2
- EP 0591224 B1
- EP 0586390 B1

**Non-patent literature cited in the description**

- **B.H. ZIMM ; W.H. STOCKMEYER.** *J. Chem. Phys.,* 1949, vol. 17, 1301
- **THOMAS KOCH ; DORIS MACHL.** Evaluation of scratch resistance in multiphase PP blends. *POLYMER TESTING,* 2007, vol. 26, 927-936
- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339
- **GREIN et al.** *Rheol.Acta,* 2007, vol. 46, 1083-1089
- **T. MEZGER.** The Rheology Handbook. Vincentz Network, 2006, 109-113
- **POELT et al.** *J. Appl. Polym. Sci.,* 2000, vol. 78, 1152-61